# EUROPÄISCHE PATENTSCHRIFT

(11) **EP 1 086 305 B1**
(45) Veröffentlichungstag und Bekanntmachung des Hinweises auf die Patenterteilung: **15.09.2004**
(21) Anmeldenummer: 00916838.6
(22) Anmeldetag: 16.02.2000
(51) Int. Cl.: F02D 41/14, F02D 41/10, F02D 35/02

(54) **VERFAHREN ZUR VERBRENNUNGSKENNGRÖSSENBESTIMMUNG EINER BRENNKRAFTMASCHINE**
METHOD FOR DETERMINING THE COMBUSTION CHARACTERISTICS OF AN INTERNAL COMBUSTION ENGINE
PROCEDE DE DETERMINATION DE GRANDEURS CARACTERISTIQUES DE COMBUSTION D'UN MOTEUR A COMBUSTION INTERNE

(30) Priorität: 10.04.1999 DE 19916204
(43) Veröffentlichungstag der Anmeldung: 28.03.2001
(73) Patentinhaber: DaimlerChrysler AG, 70567 Stuttgart (DE)
(72) Erfinder: HART, Martin, D-73760 Ostfildern (DE); KNAPP, Werner, D-79539 Lörrach (DE); WILSTERMANN, Hartung, D-74405 Gaildorf (DE)
(86) Internationale Anmeldenummer: PCT/EP2000/001251
(87) Internationale Veröffentlichungsnummer: WO 2000/061932

(56) Entgegenhaltungen:
- EP-A- 0 662 608
- WO-A-98/37322
- DE-A- 4 113 582
- DE-A- 19 647 161
- US-A- 5 363 300
- US-A- 5 803 047

## Beschreibung

Die Erfindung betrifft ein Verfahren zur Bestimmung einer Verbrennungskenngröße einer Brennkraftmaschine mittels einer im Brennraum angeordneten Ionenstromsonde, bei dem während aufeinanderfolgender Arbeitsspiele jeweils eine Ionenstromkurve durch die Ionenstromsonde gemessen wird, aus den aufeinanderfolgend gemessenen Ionenstromkurven eine verbrennungskenngrößenspezifische Ionenstromkenngröße ermittelt wird und aus dieser die Verbrennungskenngröße bestimmt wird, wobei die Bestimmung der Ionenstromkenngröße oder der Verbrennungskenngröße eine gleitende Mittelwertbildung beinhaltet. Insbesondere kann mit diesem Verfahren als Verbrennungskenngröße das Luft/Kraftstoff-Verhältnis, d.h. der Lambdawert, des im Brennraum zu verbrennenden Luft-Kraftstoff-Gemischs und die Abgasrückführrate ermittelt werden.

Aus der DE 196 47 161 A1 ist ein Verfahren zum Steuern von Zündzeitpunkt und Kraftstoffeinspritzung bei einer Brennkraftmaschine bekannt, bei dem mittels einer Zündkerze in einem Brennraum der Brennkraftmaschine der Ionenstromverlauf über ein jeweiliges Arbeitsspiel hinweg gemessen und Lage und Amplitude von Maxima der gemessenen Ionenstromkurve ausgewertet werden, um dementsprechend Steuerparameter zum Betrieb der Brennkraftmaschine, wie beispielsweise die Kraftstoffeinspritzmenge, einzustellen. Zwecks verbesserter Auswertung wird u.a. eine gleitende Mittelwertbildung bezüglich mehreren, über aufeinanderfolgende Arbeitsspiele gemessenen Ionenstromkurven benutzt.

Aus der DE 196 80 104 T1 ist es bekannt, durch Messung des I-onenstromes an einer Zündkerze in jedem einzelnen Zylinder die momentane Zusammensetzung des Luft-Kraftstoff-Gemisches zu bestimmen. Dazu wird der Lambdawert aus der Steigung der Flanke des ersten Ionenstrommaximums im Rahmen einer Ionenstromanalyse bestimmt, wobei eine gleitende Mittelwertbildung über mehrere aufeinanderfolgende Arbeitsspiele vorgesehen sein kann.

In der Patentschrift US 5.803.047 ist ein gattungsgemäßes Verfahren offenbart, bei dem ein gemessenes Ionenstromsignal in parallelen Signalverarbeitungszweigen zum einen aufintegriert und zum anderen bandpassgefiltert wird. Das aufintegrierte Signal wird einer gleitenden Mittelwertbildung unterzogen, und der so berechnete Mittelwert wird in einem Dämpfungsfilter gedämpft und damit reduziert, wenn ein Klopfzustand des Motors detektiert wird. Zur Detektion des Klopfzustands wird im parallelen Signalverarbeitungszweig die Frequenz des Ionenstromsignals in ein Analogsignal gewandelt, welches proportional zur Intensität des Motorklopfzustands ist. Anschließend wird auch dieses Signal einer gleitenden Mittelwertbildung unterzogen. Der sich daraus ergebende, ein Klopfen des Motors repräsentierende Mittelwert wird dem Dämpfungsfilter zugeführt und bestimmt das Dämpfungsmaß für das gleitend gemittelte Integral des Ionenstromsignals. Um bei Auftreten eines spontanen Klopfzustands eine verstärkte Reaktion zu erhalten, wird der für den Klopfzustand repräsentative, aus der Frequenz des Ionenstromsignals abgeleitete Signalwert mit demjenigen eines vorhergehenden Arbeitsspiels verglichen. Wenn hierbei der momentane Signalwert um mehr als 20% bis 40% über dem vorherigen Signalwert liegt, wird als neuer Dämpfungsmittelwert der aktuell erhaltene Wert multipliziert mit einem vorgebbaren Faktor festgelegt, während ansonsten der jeweils neue Dämpfungsmittelwert anhand des aktuellen und der beiden zuvor erhaltenen Signalwerte jeweils multipliziert mit einem vorgebbaren Faktor festgelegt wird, wobei die drei Faktoren in letzterem Fall kleiner als der Faktor im erstgenannten Fall sind.

Aufgabe der Erfindung ist es, ein Verfahren der eingangs genannten Art zu schaffen, dass eine zuverlässige Bestimmung einer motorischen Verbrennungskenngröße, wie der Zusammensetzung eines im Brennraum einer Brennkraftmaschine zu verbrennenden Luft-Kraftstoff-Gemisches, mit relativ geringem Aufwand während stationärer ebenso wie während instationärer Betriebsphasen der Brennkraftmaschine ermöglicht.

Diese Aufgabe wird durch ein Verfahren nach Anspruch 1 oder 2 gelöst, bei dem die gleitende Mittelwertbildung mit einer vom Betriebszustand der Brennkraftmaschine abhängigen Gewichtung derart erfolgt, dass der jeweilige Momentanwert der verbrennungskenngrößenspezifischen Ionenstromkenngröße oder der Verbrennungskenngröße einer jeweils neu gemessenen Ionenstromkurve bei der gleitenden Mittelwertbildung während instationären Brennkraftmaschinen-Betriebszuständen stärker gewichtet wird als während stationären Brennkraftmaschinen-Betriebszuständen. Auf diese Weise kann eine sich mit dem Betriebszustand der Brennkraftmaschine verändernde Verbrennungskenngröße, wie z.B. der Lambdawert oder die Abgasrückführrate, mit guter Genauigkeit sowohl während stationärer als auch instationärer Betriebsphasen der Brennkraftmaschine bestimmt werden. Während stationärer Betriebsphasen wird ein jeweils neuer Momentanwert der ausgewerteten Ionenstromkenngröße bzw. der daraus abgeleiteten verbrennungskenngröße vergleichsweise schwächer gewichtet, was die Mittelungstiefe und damit die Genauigkeit durch Ausmitteln kurzzeitiger Schwankungen groß hält. Demgegenüber wird während instationärer Betriebsphasen der jeweilige neue Momentanwert in der gleitenden Mittelwertbildung stärker gewichtet, so dass eine geringe Mittelungstiefe und damit eine schnellere Nachführung der Verbrennungskenngröße an die sich ändernden Verbrennungsbedingungen erzielt wird.

Beim Verfahren nach Anspruch 1 wird speziell der jeweils neue Mittelwert sowohl während stationären als auch während instationären Brennkraftmaschinen-Betriebszuständen in Abhängigkeit vom jeweiligen Momentanwert und dem bisherigen Mittelwert bestimmt.

Beim Verfahren nach Anspruch 2 wird speziell die Gewichtung des jeweiligen Momentanwertes der verbrennungskenngrößenspezifischen Ionenstromkenngröße oder der Verbrennungskenngröße einer jeweils neu gemessenen Ionenstromkurve bei der gleitenden Mittelwertbildung in Abhängigkeit von der Drehzahl und/oder von der Antriebslast und/oder von der Einspritzzeit der Brennkraftmaschine und/oder von seiner Abweichung vom bisherigen Ionenstromkenngrößen-Mittelwert vorgenommen. Auf diese Weise können aus einem Ionenstromsondensignal Verbrennungskenngrößen mit gutem Signal-Rausch-Verhältnis gewonnen werden, die nicht durch eine Mittelung über unterschiedliche Betriebsbereiche der Brennkraftmaschine verfälscht sind.

Vorteilhafte Ausführungsbeispiele der Erfindung sind in den Zeichnungen veranschaulicht und werden nachfolgend beschrieben. Es zeigen:
- Fig. 1: einen typischen Verlauf eines mittels einer Zündkerze im Brennraum einer Brennkraftmaschine gemessenen Ionenstromsignals,
- Fig. 2: den über eine Vielzahl von Arbeitsspielen erfassten Verlauf von Lambdawerten, die einerseits über eine Lambda-Sonde im Abgasstrang und andererseits aus an einer Zündkerze im Brennraum gemessenen Ionenstromsignalen gewonnen sind, und
- Fig. 3: ein Blockdiagramm, das zur Erläuterung eines gleitenden Mittelungsverfahrens über Ionenstromkurven bzw. verbrennungskenngrößenspezifischen Ionenstromkenngrößen dient.

Zur Durchführung der nachfolgend im einzelnen beschriebenen Vorgehensweisen zur Bestimmung einer Verbrennungskenngröße einer Brennkraftmaschine ist jede herkömmliche Ionenstrommeßeinrichtung geeignet, welche die zeitaufgelöste Messung des Ionenstromverlaufs über ein jeweiliges Arbeitsspiel der Brennkraftmaschine hinweg erlaubt. Als Ionenstrommeßsonde kann insbesondere wie üblich eine Zündkerze dienen. Es ist lediglich eine für das vorliegende Verfahren geeignete Ionenstrom-Auswerteeinheit zu verwenden, deren Realisierung sich für den Fachmann aus der nachfolgenden Beschreibung der von ihr vorzunehmenden Auswertefunktionalitäten ohne weiteres ergibt.

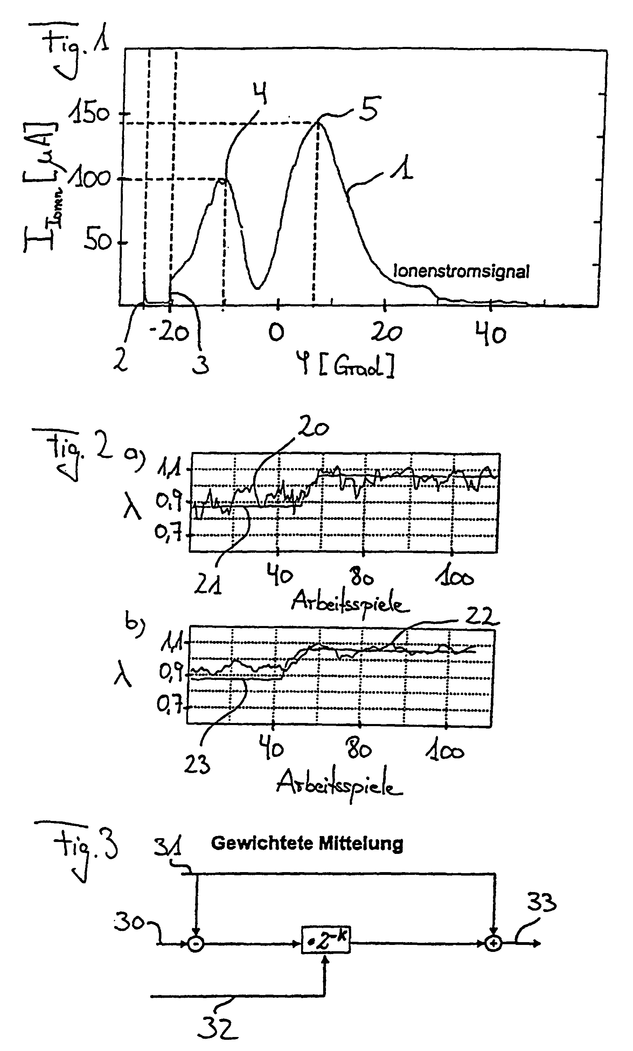

In Fig. 1 ist mittels einer Kurve 1 ein typischer, mit einer als Ionenstromsonde verwendeten Zündkerze gemessener Ionenstromverlauf als Funktion eines Kurbelwellenwinkels ϕ dargestellt. Weil die Zündkerze primär zur Zündung des Gemisches im Brennraum eingesetzt wird, ist das Ionenstromsignal zwischen einem Einsatzpunkt 2 und einem Endzeitpunkt 3 bei der in der Fig. 1 dargestellten Kurve 1 ausgeblendet. Nach Ende des Zündvorgangs bilden sich über ein Arbeitsspiel hinweg bei der Ionenstromkurve 1 zwei Maxima 4, 5 heraus, wobei der Kurvenverlauf im Detail von der Zusammensetzung des zu verbrennenden Gemisches abhängt und daher für diese repräsentativ ist.

Insbesondere bilden die Lage und die Amplitude der Maxima 4, 5 der Ionenstromkurve 1 verbrennungsspezifische Ionenstromkenngrößen, die in charakteristischer Weise u.a. von der eine Verbrennungskenngröße darstellenden Luftzahl λ (Lambdawert) des verbrannten Luft-Kraftstoff-Gemisches und der Abgasrückführrate abhängt. Die Luftzahl λ bzw. die Abgasrückführrate läßt sich beispielsweise, wie oben erwähnt, aus der Steigung der Flanke des ersten Ionenstrommaximums gewinnen. Diese Steigung kann beispielsweise aus Lage und Amplitude des ersten Ionenstrommaximums 4 der Ionenstromkurve 1 aus Fig. 1 abgeschätzt werden. Weiter sei erwähnt, daß im Fall einer Abgasrückführung oder Abgasrückhaltung aus einem Vergleich der Höhe des zweiten Ionenstrommaxiums 5 mit der Höhe des ersten Ionenstrommaximums 4 auf den prozentualen Anteil von Abgas an dem im Brennraum verbrannten Luft-Kraftstoff-Gemisch als einer weiteren Verbrennungskenngröße geschlossen werden kann.

In Fig. 2a und 2b sind für aufeinanderfolgende Arbeitsspiele die Lambdawerte eines in einer Brennkraftmaschine verbrannten Luft-Kraftstoff-Gemisches aufgetragen. Die Kurve 20 aus Fig. 2a entspricht dabei Lambdawerten, die auf ein Ionenstromsondensignal zurückgehen, das jeweils über drei aufeinanderfolgende Arbeitsspiele gleitend gemittelt ist. Die Kurve 21 ist mittels einer in einem Abgaskanal angeordneten Lambda-Sonde gewonnen und dient als Referenzkurve. Die in der Fig. 2b dargestellte Kurve 22 entspricht der Kurve 20 aus Fig. 2a und geht auf ein Ionenstromsondensignal zurück, das diesmal jedoch über zehn aufeinanderfolgende Arbeitsspiele gleitend gemittelt ist. Die Kurve 23 in Fig. 2b bildet wiederum eine Referenzkurve und gibt wiederum das Signal einer in einem Abgaskanal angeordneten Lambda-Sonde wieder. Zwischen dem vierzigsten und dem sechzigsten Arbeitsspiel weisen die in den Fig. 2a und 2b dargestellten Kurven 20, 21, 22, 23 einen Sprung auf. Ursache dieses Sprunges ist eine plötzliche Änderung der Betriebsparameter der Brennkraftmaschine, so daß sich eine andere Zusammensetzung des verbrannten Luft-Kraftstoff-Gemisches ergibt.

Die Kurve 22 aus Fig. 2b unterscheidet sich von der Kurve 20 aus Fig. 2a durch ein günstigeres Signal-Rausch-Verhältnis, welches durch die größere Anzahl von Datenpunkten, über die gemittelt wird, bewirkt wird. Dem verglichen mit der Kurve 20 günstigeren Signal-Rausch-Verhältnis der Kurve 22 steht jedoch eine trägere Reaktion der Kurve 22 auf den Lambdawert-Sprung im Bereich zwischen dem vierzigsten und sechzigsten Arbeitsspiel gegenüber. Je mehr zuvor gemessene Ionenstromkurven also zwecks Verbesserung des Signal-Rausch-Verhältnisses zur gleitenden Mittelung über daraus gewonnene Lambdawerte herangezogen werden, um so träger reagiert der gemittelte Lambdawert auf plötzliche Änderungen des Betriebszustands der Brennkraftmaschine.

Diesem Umstand wird erfindungsgemäß durch ein betriebszustandsabhängiges Mittelungsverfahren Rechnung getragen, bei dem für die gleitende Mittelwertbildung die Mittelungstiefe bei plötzlichen Änderungen des Betriebszustandes der Brennkraftmaschine kleiner gewählt wird als in stationären Betriebsphasen.

Zur Bestimmung des Lambdawertes wird dabei zunächst für jedes einzelne Arbeitsspiel aus einer gemessenen Ionenstromkurve ein momentaner, vorläufiger Lambdawert bestimmt, der sich aus Lage und Amplitude des ersten Ionenstrommaximums 4 gemäß Fig. 1 errechnet. Dieser vorläufige Lambdawert wird in einem Zwischenspeicher abgelegt, in den jeweils die z.B. drei zuletzt aufeinanderfolgend bestimmten, vorläufigen Lambdawerte aufgenommen sind. Im weiteren wird der aktuelle, vorläufige Lambdawert einer gleitenden Mittelwertbildung unterzogen, die nachfolgend anhand der Fig. 3 erläutert wird. Vom momentanen, vorläufigen Lambdawert 30 wird in einem ersten Schritt ein zwischengespeicherter bisheriger Mittelwert 31 subtrahiert, und die Differenz wird anschließend mit einem Wichtungsfaktor 32 multipliziert. Dieser Wichtungsfaktor 32 wird durch eine negative Zweierpotenz 2^{-k} gebildet, wobei dem Exponenten k die Bedeutung einer Wichtungskonstante zukommt, die einstellbar ist.

Die Wichtungskonstante k wird durch einen in einem zweiten Schritt durchgeführten Vergleich des bisherigen Mittelwertes 31 mit den drei im Zwischenspeicher abgelegten, zuletzt ermittelten Lambdawerten festgelegt. Übersteigt die Abweichung aller drei dort abgelegten Lambdawerte vom Mittelwert 31 in ihrem Betrag einen vorbestimmten Schwellwert, was eine instationäre Betriebszustandsänderung indiziert, so wird der Wichtungskonstanten k ein relativ niedriger Wert von z.B. drei zugewiesen. Andernfalls wird ein eher gleichbleibender, stationärer Betriebszustand angenommen und die Wichtungskonstante k auf einen höheren Wert von z.B. sieben festgesetzt. Ein dritter Schritt besteht darin, zu dem bisherigen Mittelwert 31 die mit dem Wichtungsfaktor 2^{-k} multiplizierte Differenz von altem Mittelwert 31 und aktuellem, vorläufigem Lambdawert 30 zu addieren. Dieser neue Mittelwert 33 wird dann als neu geltender, gleitender Mittelwert 31 zwischengespeichert und als neuer gültiger Lambdawert ausgegeben. Der Wichtungsfaktor k bestimmt somit bei diesem Verfahrensbeispiel den Einfluß des jeweils neuen Momentanwertes relativ zu den zuvor ermittelten Werten bei der gleitenden Mittelwertbildung und folglich die Mittelungstiefe.

Eine Modifikation des Verfahrens besteht darin, die Wichtungskonstante k nicht oder jedenfalls nicht allein aufgrund eines Vergleichs von wenigen aufeinanderfolgend gemessenen Lambdawerten mit dem geltenden Mittelwert festzulegen, sondern sie alternativ oder zusätzlich in Abhängigkeit davon zu wählen, ob relevante Motorbetriebsparameter, wie beispielsweise Drehzahl, Antriebslast oder Einspritzzeit, die hierzu überwacht werden, einen stationären oder einen instationären Motorbetriebszustand anzeigen. Wird eine plötzliche Änderung dieser Parameter festgestellt, so wird der Wert der Wichtungskonstante k entsprechend verkleinert. Weiter sei bemerkt, daß die im Verfahren erwähnten Werte von drei bzw. sieben für die Wichtungskonstante k lediglich Anhaltspunkte darstellen und je nach Anwendungsfall auch andere Werte annehmen können. Außerdem sei erwähnt, daß in entsprechender Weise, wie oben für den Lambdawert beschrieben, auch eine Abgasrückführrate der gemessenen Ionenstromkurven durch dieses Mittelungsverfahren in verbesserter Weise bestimmt werden kann. Ferner sei bemerkt, daß, statt wie beschrieben, aus zunächst ungemittelten Ionenstromkurven eine verbrennungskenngrößenspezifische Ionenstromkenngröße oder die Verbrennungskenngröße selbst zu bestimmen und zu ermitteln, es auch möglich ist, aufeinanderfolgend gemessene Ionenstromkurven als ganze Kurven zu mitteln, um dann aus einer demgemäß gemittelten Ionenstromkurve eine zuverlässige Verbrennungskenngröße zu bestimmen, wie etwa Lambdawert oder Abgasrückführanteil des Luft-Kraftstoff-Gemischs im Brennraum.

## Patentansprüche

1. Verfahren zur Bestimmung einer Verbrennungskenngröße einer Brennkraftmaschine mittels einer im Brennraum angeordneten Ionenstromsonde, bei dem
- während aufeinanderfolgender Arbeitsspiele jeweils eine Ionenstromkurve durch die Ionenstromsonde gemessen wird, aus den aufeinanderfolgend gemessenen Ionenstromkurven eine verbrennungskenngrößenspezifische Ionenstromkenngröße und aus dieser die Verbrennungskenngröße bestimmt wird,
- wobei die Bestimmung der Ionenstromkenngröße oder der Verbrennungskenngröße eine gleitende Mittelwertbildung beinhaltet, die mit einer vom Betriebszustand der Brennkraftmaschine abhängigen Gewichtung derart erfolgt, dass der jeweilige Momentanwert der verbrennungskenngrößenspezifischen Ionenstromkenngröße oder der Verbrennungskenngröße einer jeweils neu gemessenen Ionenstromkurve bei der gleitenden Mittelwertbildung während instationären Brennkraftmaschinen-Betriebszuständen stärker gewichtet wird als während stationären Brennkraftmaschinen-Betriebszuständen, wobei der jeweils neue Mittelwert (33) während stationären und instationären Brennkraftmaschinen-Betriebszuständen in Abhängigkeit vom jeweiligen Momentanwert (30) und dem bisherigen Mittelwert (31) bestimmt wird.

2. Verfahren zur Bestimmung einer Verbrennungskenngröße einer Brennkraftmaschine mittels einer im Brennraum angeordneten Ionenstromsonde, bei dem
- während aufeinanderfolgender Arbeitsspiele jeweils eine Ionenstromkurve durch die Ionenstromsonde gemessen wird, aus den aufeinanderfolgend gemessenen Ionenstromkurven eine verbrennungskenngrößenspezifische Ionenstromkenngröße und aus dieser die Verbrennungskenngröße bestimmt wird,
- wobei die Bestimmung der Ionenstromkenngröße oder der Verbrennungskenngröße eine gleitende Mittelwertbildung beinhaltet, die mit einer vom Betriebszustand der Brennkraftmaschine abhängigen Gewichtung derart erfolgt, dass der jeweilige Momentanwert der verbrennungskenngrößenspezifischen Ionenstromkenngröße oder der Verbrennungskenngröße einer jeweils neu gemessenen Ionenstromkurve bei der gleitenden Mittelwertbildung während instationären Brennkraftmaschinen-Betriebszuständen stärker gewichtet wird als während stationären Brennkraftmaschinen-Betriebszuständen,
- wobei die Gewichtung des jeweiligen Momentanwertes der verbrennungskenngrößenspezifische Ionenstromkenngröße oder der Verbrennungskenngröße einer jeweils neu gemessenen Ionenstromkurve bei der gleitenden Mittelwertbildung in Abhängigkeit von der Drehzahl und/oder von der Antriebslast und/oder von der Einspritzzeit der Brennkraftmaschine und/oder von seiner Abweichung vom bisherigen Mittelwert vorgenommen wird.

## Claims

1. Method of determining a combustion characteristic of an internal combustion engine by means of an ion current probe disposed in the combustion chamber, whereby
- an ion current curve is measured by the ion current probe during every consecutive working cycle, an ion current curve characteristic specific to the combustion characteristic is determined from the consecutively measured ion current curves and the combustion characteristic is determined from it,
- the process of determining the ion current curve characteristic or the combustion characteristic incorporates a process of obtaining a sliding average which is operated on the basis of a weighting dependent on the operating state of the internal combustion engine, whereby the respective instantaneous value of the ion curve characteristic specific to the combustion characteristic or the combustion characteristic of each newly measured ion current curve is assigned a higher weighting during non-stationary engine operating states than during stationary engine operating states for the purpose of obtaining the sliding average, and each new average value (33) during stationary and non-stationary engine operating states is determined depending on the respective instantaneous value (30) and the existing average value (31).

2. Method of determining a combustion characteristic of an internal combustion engine by means of an ion current probe disposed in the combustion chamber, whereby
- an ion current curve is measured by the ion current probe during each consecutive working cycle, an ion current curve specific to the combustion characteristic is determined from the consecutively measured ion current curves and the combustion characteristic is determined from it,
- the process of determining the ion current curve characteristic or the combustion characteristic incorporates a process of obtaining a sliding average which is operated on the basis of a weighting dependent on the operating state of the internal combustion engine, whereby the respective instantaneous value of the ion curve characteristic specific to the combustion characteristic or the combustion characteristic of each newly measured ion current curve is assigned a higher weighting during non-stationary engine operating states than during stationary engine operating states for the purpose of obtaining the sliding average,
- and in obtaining the sliding average, the weighting of the respective instantaneous value of the ion current characteristic specific to combustion or the combustion characteristic of each newly measured ion current curve is determined depending on the speed and/or drive load and/or injection timing of the internal combustion engine and/or depending on its variance from the existing average value.

## Revendications

1. Procédé pour déterminer une grandeur caractéristique de combustion d'un moteur à combustion interne au moyen d'une sonde à courant ionique agencée dans la chambre de combustion, dans lequel
- pendant des cycles de travail successifs, on mesure une courbe respective du courant ionique par la sonde à courant ionique, et à partir des courbes mesurées successivement du courant ionique on détermine une grandeur caractéristique de courant ionique spécifique à la grandeur caractéristique de combustion, et à partir de celle-ci on détermine la grandeur caractéristique de combustion,
- la détermination de la grandeur caractéristique de courant ionique ou de la grandeur caractéristique de combustion englobe le calcul d'une moyenne glissante, qui s'effectue avec une pondération dépendante de l'état de fonctionnement du moteur à combustion interne, de telle sorte que la valeur momentanée respective de la grandeur caractéristique de courant ionique spécifique à la grandeur caractéristique de combustion ou de la grandeur caractéristique de combustion d'une courbe respective nouvellement mesurée du courant ionique est, lors du calcul de la moyenne glissante, pendant des états de fonctionnement non stationnaires du moteur à combustion interne, pondérée plus fortement que pendant des états de fonctionnement stationnaires du moteur à combustion interne, et on détermine la nouvelle valeur moyenne (33) respective pendant des états de fonctionnement stationnaires et non stationnaires du moteur à combustion interne en fonction de la valeur momentanée respective (30) et de la valeur moyenne (31) précédente.

2. Procédé pour déterminer une grandeur caractéristique de combustion d'un moteur à combustion interne au moyen d'une sonde à courant ionique agencée dans la chambre de combustion, dans lequel
- pendant des cycles de travail successifs, on mesure une courbe respective du courant ionique par la sonde à courant ionique, et à partir des courbes mesurées successivement du courant ionique on détermine une grandeur caractéristique de courant ionique spécifique à la grandeur caractéristique de combustion, et à partir de celle-ci on détermine la grandeur caractéristique de combustion,
- la détermination de la grandeur caractéristique de courant ionique ou de la grandeur caractéristique de combustion englobe le calcul d'une moyenne glissante, qui s'effectue avec une pondération dépendante de l'état de fonctionnement du moteur à combustion interne, de telle sorte que la valeur momentanée respective de la grandeur caractéristique de courant ionique spécifique à la grandeur caractéristique de combustion ou de la grandeur caractéristique de combustion d'une courbe respective nouvellement mesurée du courant ionique est, lors du calcul de la moyenne glissante, pendant des états de fonctionnement non stationnaires du moteur à combustion interne, pondérée plus fortement que pendant des états de fonctionnement stationnaires du moteur à combustion interne,
- on effectue la pondération de la valeur momentanée respective de la grandeur caractéristique de courant ionique spécifique à la grandeur caractéristique de combustion ou de la grandeur caractéristique de combustion d'une courbe respective nouvellement mesurée du courant ionique, lors du calcul de la moyenne glissante, en fonction de la vitesse de rotation et/ou de la charge d'entraînement et/ou du temps d'injection du moteur à combustion interne et/ou de son écart par rapport à la valeur moyenne précédente.
